# NEW EUROPEAN PATENT SPECIFICATION

(11) **EP 1 746 007 B2**
(45) Date of publication and mention of the opposition decision: **19.04.2017**
(45) Mention of the grant of the patent: 08.05.2013
(21) Application number: 05025525.6
(22) Date of filing: 23.11.2005
(51) Int. Cl.: B61G 11/16, B61D 15/06, B61F 1/08, B62D 21/15

(54) **Impact energy absorbing device for a vehicle**
Stoßenergieabsorbierende Vorrichtung für ein Fahrzeug
Dispositif d'absorption de l'énergie d'impact pour un véhicule

(30) Priority: 22.07.2005 EP 05015957
(43) Date of publication of application: 24.01.2007
(73) Proprietor: Bombardier Transportation GmbH, 10785 Berlin (DE)
(72) Inventor: Fraikin, Bruno, 59700 marcq en baroeul (FR)
(74) Representative: Cohausz & Florack

(56) References cited:
- WO-A-2006/024059
- WO-A2-2006/024059
- AT-A1- 501 690
- DE-U1- 9 311 041
- DE-U1- 29 703 351
- DE-U1- 29 703 351
- DE-U1- 29 722 844
- DE-U1- 29 722 844
- FR-A1- 2 775 240
- US-A- 3 508 633
- US-A- 5 035 307
- US-A1- 2002 073 887
- US-A1- 2003 222 477

## Description

The invention relates to an impact energy absorbing device for a vehicle, in particular for a rail vehicle, comprising at least one elongated energy absorbing element and a contact element as it is defined in claim 1. The energy absorbing element has a first longitudinal axis, a contact end facing an impact partner and a mounting end facing the vehicle. The energy absorbing element is adapted to be deformed in a defined manner along the longitudinal axis in an impact process with the impact partner. The contact element is mounted to the energy absorbing element at the contact end. The invention also relates to a corresponding vehicle comprising such an impact energy absorbing device.

Modern rail vehicles usually are equipped with exchangeably mounted impact energy absorbing devices undergoing a defined irreversible deformation upon an abnormal impact with an impact partner, the impact energy of the abnormal impact exceeding the impact energy to be expected during normal operation of the vehicle, e.g. during so called service collisions. Such generic impact energy absorbing devices are known, for example, from DE 201 17 536 U1 and EP 0 831 005 A2. The known impact energy absorbing devices comprise one or more generally tubular energy absorbing elements that are compressed along their longitudinal axis thereby undergoing a local folding or buckling process of their outer shell that progresses along the longitudinal axis.

On the one hand, the defined deformation dissipates impact energy and, thus, reduces the accelerations and, thus, the loads that the remaining structure of the vehicle as well as its eventual passengers undergo in such an abnormal impact event. Furthermore, the defined deformation of the exchangeably mounted impact energy absorbing devices occurs before other non or less easily exchangeable parts of the vehicle are deformed. Thus, in cases with a sufficiently low impact energy, only the impact energy absorbing devices and, eventually, other easily exchangeable parts of the vehicle, e.g. corresponding components of an outer vehicle shell, undergo deformation and damage, respectively. Thus, vehicle repair after such an abnormal impact event is greatly facilitated reducing down times of the vehicle.

In the past, the known impact energy absorbing devices have been tested based on the assumption that no vertical offset exists between the contact element of the respective impact energy absorbing device and a contact part, eventually a further contact element of a further impact energy absorbing device, of the impact partner. In the meantime, it has turned out that this assumption does not sufficiently correspond to the real impact conditions. In reality, vertical offsets between the contact elements of the impact energy absorbing devices of the impact partners may range up to 40 mm. Thus, for example, the European Committee for Standardization is currently drafting a new European Standard relating to the crashworthiness requirements for railway vehicle bodies requiring that the required validation process (simulation) demonstrates that, with an initial vertical offset of 40 mm at the point of impact, contact of at least one wheelset of every bogie is maintained with the track throughout the collision simulation (see European Standard Draft prEN 15227, Railway applications - Crashworthiness requirements for railway vehicle bodies, Section 7.2, European Committee for Standardization, April 2005)

Such a vertical offset poses several problems. A major one is that a considerable bending moment about a horizontal axis perpendicular to the longitudinal axis of the impact energy absorbing device is introduced via the contact element into the impact energy absorbing device. This bending moment may lead to global bending of the impact energy absorbing device along its longitudinal axis and a reduction or even disruption of the even local buckling process.

As a consequence of the global bending, the contact elements may perform a rotation about this horizontal axis up to a point where the shear forces acting in the contact plane of the contact elements exceed the frictional or other holding forces acting in this contact plane. In this case the contact elements may come out of engagement leading to a climbing process between the two impact partners. Given a sufficient angle of rotation of the contact elements, this may even occur when the contact elements have so called anti-climbing means, e.g. one or several ribs leading to a positive connection of the contact elements in a direction parallel to the contact plane.

As a further consequence of the global bending and the reduction or even disruption of the local buckling process, a considerable reduction in the energy absorption capacity of the impact energy absorbing device occurs leading to higher accelerations and loads acting on the remaining vehicle structure and the passengers.

WO 2006/024059 A2, DE 93 11 041 U1, DE 297 03 351 U1 and DE 297 22 844 U1 disclose solutions, where two guide elements of a guide device extend throughout the energy absorbing element such that the guide elements engage throughout the entire impact process to prevent such global bending. Similar applies to FR 2 775 240 A1 disclosing a generic impact energy absorbing device with two-stage energy absorption. All these solutions have the disadvantage that comparatively much space is to be kept free for the long guide element extending throughout the energy absorbing element to achieve proper guiding and energy absorption throughout the entire impact process.

It is thus an object of the present invention to provide an impact energy absorbing device that, at least to some extent, overcomes the above disadvantages. It is a further object of the present invention to provide an impact energy absorbing device that, in a space saving manner, at least reduces the risk of global buckling of the impact energy absorbing device at an impact with lateral offset, i.e. vertical and/or horizontal transverse offset, of the impact partners.

The above objects are achieved by the features of claim 1.

The present invention is based on the technical teaching that at least a reduction of the risk of global buckling of the impact energy absorbing device at an impact with lateral offset of the impact partners is achieved when a guide device is provided, the guide device being adapted to cooperate with the energy absorbing element in the impact process, the guide device further being adapted to at least limit, in the impact process, a rotation of the contact element about a first transverse axis running transverse to the first longitudinal axis.

Such a guide device is able to limit the rotation of the contact element by at least widely balancing the bending moment resulting from the lateral offset such that the intended progressive local buckling process continues to be the prevailing deformation and energy absorption process. Thus, in a very simple manner, the energy absorption performance of the impact energy absorbing device may be at least largely maintained at a lateral offset impact situation.

It will be appreciated in this context that the term "lateral offset", in the sense of the invention, designates any offset in a direction running transverse to the longitudinal axis. In other words, in a typical coordinate system of a vehicle, the term "lateral offset" may for example designate an offset in a vertical direction and/or in a horizontal transverse direction of the vehicle.

Preferably the rotation of the contact element is limited as far as possible. Thus, preferably, guide device, in the impact process, limits a first rotation angle of the contact element about the first transverse axis to less than 20°, preferably less than 10°, further preferably to less than 5°. The further the rotation is limited, the lower is the risk of a global buckling process and, thus, the risk of a sharp decline of the energy absorption performance.

The guide device may be designed in any suitable manner in order to cooperate with the energy absorbing element. Preferably, the guide device is adapted to cooperate, in the impact process, at least with parts of the energy absorbing element that are essentially undeformed when cooperating with the guide device. This has the advantage that the undeformed parts of the energy absorbing element provide a defined guidance partner to the guide device leading to a well defined deformation behavior. The contact area between the energy absorbing element and the guide device may be spaced from the deformation area of the energy absorbing element undergoing the deformation in the impact process. However, it will be appreciated that, with proceeding deformation of the energy absorbing element, the contact area between the energy absorbing element and the guide device may change its location. In other words, previous contact areas between the energy absorbing element and the guide device may be deformed as the deformation proceeds.

The guide device comprises at least one elongated first guide element and the energy absorbing element comprises at least one second guide element. Furthermore, the first guide element has a first end mechanically connected to the contact element and a free second end, the first guide element being adapted to cooperate with the least one second guide element in the impact process. More precisely, according to the invention, the first guide element is adapted to come into engagement with a part of the second guide element as deformation of said energy absorbing element proceeds in an impact event, the part of the second guide element being located between the contact end and the mounting end of the energy absorbing element.

Finally, the first guide element has a second longitudinal axis, the second longitudinal axis running transverse, in particular perpendicular, to the first transverse axis. With such a configuration, the first guide element, when cooperating with the least one second guide element, may take or at least widely balance the bending moment about the first transverse axis in case of a lateral offset impact.

Preferably, the energy absorbing element comprises a plurality of second guide elements, the second guide elements being mutually spaced apart along the second longitudinal axis. With these spaced apart second guide elements, a good support of the first guide element may be achieved in order to take up or at least widely balance the bending moment about the first transverse axis.

According to the invention, the energy absorbing element comprises a plurality of stiffening elements located within an inner absorbing element space defined by the energy absorbing element. The stiffening elements are mutually spaced apart along the first longitudinal axis and extend in a plane transverse to the first longitudinal axis. The stiffening elements promote the desired local buckling during deformation. Furthermore, they are highly suitable for forming the at least one second guide element. Thus, at least one of the stiffening elements forms the second guide element. The second guide element may be designed in any suitable manner. Preferably, at least one second guide element is formed by a recess of the stiffening element, the first guide element engaging the recess in the impact process.

With variants of the impact energy absorbing device not in accordance with the invention, the second guide element is formed by a first guide wall and a second guide wall. The first guide wall and the second guide wall are spaced apart and, at least during the impact process, receive the first guide element between them. Each of the first guide wall and the second guide wall extends in a guide wall plane substantially parallel to the first transverse axis and the second longitudinal axis. With such an arrangement, in case of an offset impact, a contact part of the first guide element may simply slide along one of these walls which provides a support acting against the bending moment about the first transverse axis.

The first and second guide wall may be provided in any suitable manner, e.g. by separate wall components. Preferably, they are provided in a very simple and effective manner by a single component. Thus, with such embodiments, the first guide wall and the second guide wall form part of an element of U-shaped or ring shaped cross section.

The guide device is mounted to the impact energy absorbing device and may be deformed as well during the impact process as long as the guiding function is maintained for a sufficiently long period.

Moreover, the guide device is mounted to a structural component that is moving during the deformation process of the impact energy absorbing device. This has the advantage that at least plastic deformation of the guide device does not necessarily have to occur during the deformation process of the impact energy absorbing device, thereby ensuring stable guiding properties throughout the impact process.

The first guide element may have any suitable shape. To provide a reliable guiding performance throughout the impact process, preferably, the first guide element tapers towards the second end. Thus, event at slight rotations of the contact element due to the bending moments acting during offset impact, the tapered end of the moving first guide element still is able to hit and reach through corresponding recesses of the second guide elements.

With preferred variants of the impact energy absorbing device according to the invention, the contact element comprises anti-climbing means, in particular at least one anti-climbing rib, in order to efficiently prevent climbing processes under any circumstances.

It will be appreciated that one single guide device may be sufficient to prevent or at least strongly limit rotation of the contact element and, thus, global buckling of the impact energy absorbing device. However, with certain variants of the impact energy absorbing device according to the invention, a plurality of guide devices is provided, the guide devices being adapted to cooperate with the energy absorbing element in the impact process and being adapted to at least limit, in the impact process, rotation of the contact element about the first transverse axis.

The invention further relates to a vehicle, in particular a rail vehicle, comprising an impact energy absorbing device according to the invention.

Further embodiments of the present invention will become apparent from the dependent claims and the following description of a preferred embodiment of the invention which refers to the appended figures. It is shown in:
- Figure 1: a schematic representation of a preferred embodiment of an impact energy absorbing device for a rail vehicle according to the invention;
- Figure 2: a schematic partially sectional representation of a detail of two impact energy absorbing devices of Figure 1 in an impact situation;
- Figure 3: a schematic representation of an impact energy absorbing device for a rail vehicle not in accordance with the invention in an impact situation;
- Figure 4: a schematic partially sectional representation of a detail of the two impact energy absorbing devices of Figure 3;
- Figure 5: a schematic partially sectional representation of an impact energy absorbing device for a rail vehicle not in accordance with the invention;
- Figure 6: a schematic partially sectional representation of an impact energy absorbing device for a rail vehicle not in accordance with the invention;
- Figure 7: a schematic partially sectional representation of a further impact energy absorbing device for a rail vehicle not in accordance with the invention.

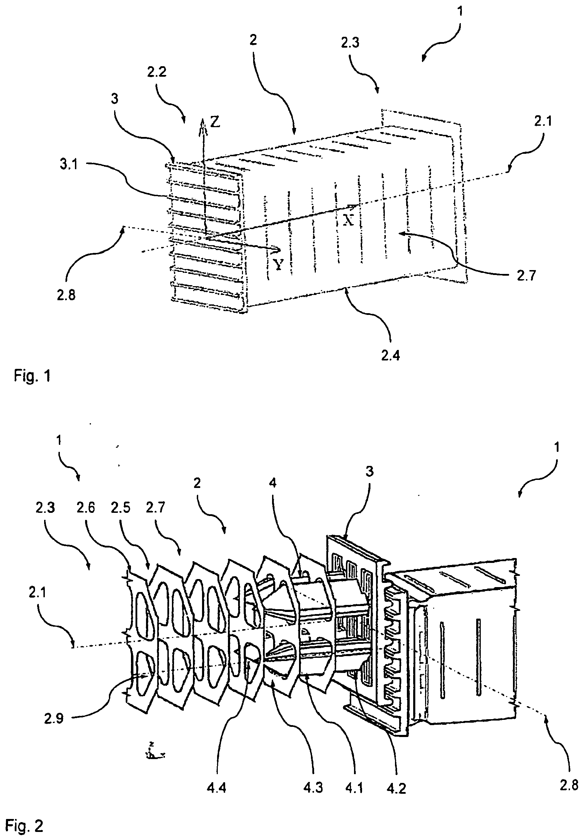

In the following a preferred embodiment of an impact energy absorbing device 1 for a rail vehicle according to the invention will be described with reference to Figure 1 and 2. Figure 1 shows a schematic representation the impact energy absorbing device 1 while Figure 2 is a schematic partially sectional representation of a detail of two identical impact energy absorbing devices 1 of Figure 1 in an impact situation.

The impact energy absorbing device 1 comprises an elongated energy absorbing element 2 and a contact element 3. The energy absorbing element 2 has a first longitudinal axis 2.1 (X-axis), a contact end 2.2 facing an impact partner and a mounting end 2.3 facing a vehicle - not shown - to which the impact energy absorbing device 1 is mounted. A mounting flange is provided at the mounting end 2.3 for mounting the energy absorbing element 2 to the vehicle.

The contact element 3 is mounted to the energy absorbing element 2 at its contact end 2.2. The contact element 3 has the shape of a plate carrying horizontal ribs 3.1 forming an anti-climbing device.

The energy absorbing element 2 has a tubular outer shell 2.4 of rectangular cross section. This outer shell 2.4 defines an inner absorbing element space 2.5. As can be seen from Figure 2 - where the outer shell 2.4 of the left energy absorbing element 2 is omitted for reasons of better visibility - a plurality of stiffening elements in the form of stiffening plates 2.6 is provided within this inner absorbing element space 2.5. The stiffening plates 2.6 are connected, e.g. welded, to the outer shell 2.4. The stiffening plates 2.6 are evenly spaced along the first longitudinal axis 2.1, such that a plurality of energy absorbing segments 2.7 are consecutively formed along the longitudinal axis 2.1 between adjacent stiffening plates 2.6. However, it will be appreciated that, with other embodiments of the invention, uneven spacing of the stiffening plates may be provided, e.g. in order to promote a certain deformation behavior of the impact energy absorbing device.

In an impact process, starting at the contact end 2.2, the outer shell 2.4 is deformed in defined manner to absorb impact energy. The outer shell 2.4 successively locally buckles from segment 2.7 to segment 2.7. In other words, the energy absorbing segments 2.7 successively collapse in the direction of the longitudinal axis 2.1. The stiffening plates 2.6 hereby promote a local buckling process that is as even as possible. With this segment wise local buckling, the energy absorbing element 2 is successively compressed, i.e. the length of the energy absorbing element 2 along its first longitudinal axis is successively reduced, while the impact energy is absorbed.

In an offset impact situation as shown in Figure 2, where there is a lateral offset - here a vertical offset (along the Z-axis in Figure 1 and 2) - between the impact partners 1, the first longitudinal axes 2.1 of the energy absorbing elements 2 are laterally offset as well. As a consequence of the laterally offset axial impact forces, a considerable bending moment about a first transverse axis 2.8 (Y-axis) is introduced into the respective energy absorbing element 2 via the contact element 3.

In conventional systems, this bending moment causes an uneven distribution of the compressive forces that act within the cross section of the outer shell of the energy absorbing element. Depending on the offset and the impact energy, this may lead to a situation where the local buckling in the energy absorbing segments occurs only or predominantly on the side (e.g. the lower side) where the compressive forces are increased due to the bending moment. On the other side (e.g. the upper side), where the compressive forces are reduced due to the bending moment, the sections of the outer shell may remain essentially straight. If this happens, global buckling of the energy absorbing element extending over a large number of energy absorbing segments occurs leading to a progressive rotation of the contact element about this first transverse axis.

As explained above, as a consequence of such a global buckling, the contact elements may perform a rotation about this first transverse axis up to a point where the shear forces acting in the contact plane of the contact elements exceed the frictional and the holding forces of the anti-climbing means acting in this contact plane. In this case the contact elements, despite the presence of the anti-climbing means, may come out of engagement leading to a climbing process between the two impact partners.

A further consequence of such a global buckling process is a considerable reduction in the energy absorption capacity of the impact energy absorbing device leading to higher accelerations and loads acting on the remaining vehicle structure and the passengers.

To avoid this undesired scenario, according to the invention, a guide device 4 is provided cooperating with the energy absorbing element 2. The guide device 4 is located within the inner absorbing element space 2.5 and comprises four elongated first guiding elements 4.1 cooperating with corresponding mating recesses 2.9 of the stiffening plates 2.6.

The first guiding element 4.1 has a first end 4.2, at which it is rigidly connected to the back side of the contact element 3, and a free second end 4.3. Towards its second end 4.3, the first guiding element 4.1 tapers along its second longitudinal axis 4.4. The second longitudinal axis 4.4 of the first guiding element 4.1 runs transverse, namely perpendicular, to the first transverse axis 2.8. Furthermore, it runs parallel to the first longitudinal axis 2.1 of the energy absorbing element 2.

In the undeformed state of the energy absorption element 2, the first guiding element 4.1 and the recesses 2.9 of the stiffening plates 2.6 are aligned along the second longitudinal axis 4.4 of the first guiding element 4.1.

The dimension of the first guiding element 4.1 along its second longitudinal axis 4.4 is selected such that, in an undeformed state of the energy absorption element 2, the untapered part of the first guiding element 4.1 engages at least the recesses 2.9 of two adjacent stiffening plates 2.6 forming second guide elements.

In an impact event with a lateral offset as it is shown in Figure 2, the contact between the first guiding elements 4.1 and the stiffening plates 2.6 forming second guide elements provides a support to the contact element 3 counteracting the bending moment acting onto the contact element 3 due to the lateral offset of the impact partners 1. This balancing support to the contact element 3 prevents rotation of the contact element 3 about the first transverse axis 2.8 and, thus, global buckling of the energy absorbing element 2 as it has been described above in the context of conventional systems.

The play of the first guiding elements 4.1 within the recesses 2.9 is selected such that the guide device 4 shown limits rotation of the contact element 3 about the first transverse axis 2.8 to a maximum of about 5° to 8°. However, it will be appreciated that other angular limits, in particular lower angular limits, may be achieved with other embodiments of the invention.

As deformation of the energy absorbing element 2 proceeds along the first longitudinal axis 2.1, the first guiding elements 4.1 move towards the mounting end 2.3 of the energy absorbing element 2. Thereby, first guiding elements 4.1 successively engage further stiffening plates 2.6 by reaching through the corresponding recesses 2.9. The tapered end 4.3 of the first guiding elements 4.1 hereby ensures that they hit the recesses 2.9 despite any potential lateral an/or angular deviation from the exact alignment that may occur as the energy absorbing segments 2.7 deform.

In preferred variants of the invention, the longitudinal dimension of the first guiding elements 4.1 is selected such that, during deformation of the energy absorbing element 2, they engage at least one stiffening plate 2.6 lying in a section of the energy absorbing element 2 that is still essentially undeformed. This guarantees proper guidance and bending moment balancing and, thus, prevention of global buckling throughout the deformation of the energy absorbing element 2.

As deformation of the energy absorbing element 2 proceeds along the first longitudinal axis 2.1, the first guiding elements 4.1 engage more and more stiffening plates 2.6. This continues up to the end of the deformation process where, eventually, the first guiding elements 4.1 engage all stiffening plates 2.6.

It will be appreciated that, with other embodiments of the invention, another number of guiding elements may be selected. In some cases, even one single guiding element may be sufficient to avoid a global buckling process of the energy absorbing element about a transverse axis.

In the embodiment shown in Figure 2, the first guiding elements 4.1 are formed by a tubular element of essentially triangular cross section with rounded edges. Preferably, the cross section of the first guiding elements 4.1 - apart from the tapered end 4.3 - is adapted to fit the recesses 2.9 of the stiffener plates 2.6 as close as possible in order to reduce the rotation angle of the contact element as far as possible. However, it will be appreciated that, with other embodiments of the invention, another shape of the guiding elements may be selected.

The energy absorbing element 2 has a total length along the first longitudinal axis 2.1 of about 1300 mm and a total width along the first transverse axis 2.8 of about 400 mm. However, it will be appreciated that with other embodiments of the invention, other dimensions may be chosen according to the requirements of the design and the expected load situation. The first guiding elements 4.1 have a total length along the first longitudinal axis 2.1 of about 350 mm. However, it will be appreciated that with other embodiments of the invention, other dimensions may be chosen according to the requirements of the design and the expected load situation. In particular, another thickness, stiffener pitch, cross section etc. may be chosen.

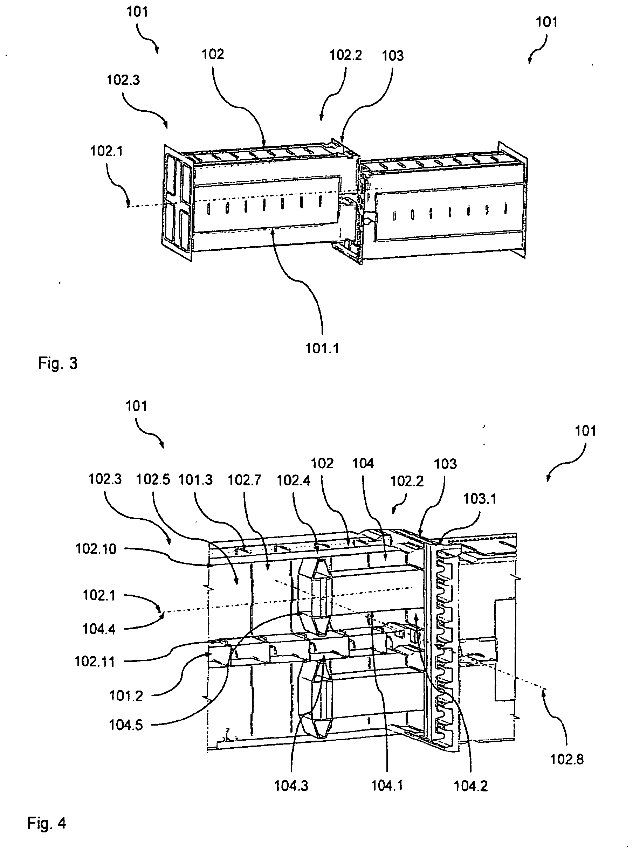

In the following an impact energy absorbing device 101 for a rail vehicle not in accordance with the invention will be described with reference to Figure 3 and 4. Figure 3 shows a schematic perspective view of two identical impact energy absorbing devices 101 in an impact situation while Figure 4 is a schematic partially sectional representation of a detail of the impact energy absorbing devices 101 of Figure 3.

The impact energy absorbing device 101 comprises four elongated energy absorbing elements 102 and a contact element 103. Each energy absorbing element 102 has a first longitudinal axis 102.1 (X-axis), a contact end 102.2 facing an impact partner and a mounting end 102.3 facing a vehicle - not shown - to which the impact energy absorbing device 101 is mounted. A mounting flange is provided at the mounting end 102.3 for mounting the energy absorbing elements 102 to the vehicle.

The contact element 103 is mounted to the respective energy absorbing element 102 at its contact end 102.2. The contact element 103 has the shape of a plate carrying horizontal ribs 103.1 forming an anti-climbing device.

The energy absorbing elements 102 are connected via four connecting sheet metal plates 101.1, e.g. via welding points or welding seams. Thus, an energy absorbing device 101 of essentially closed rectangular outer shape enclosing an inner absorbing device space 101.2 is formed. Within this inner absorbing device space 101.2 a plurality of stiffening elements in the form of cross shaped stiffening plates 101.3 is connected, e.g. welded, to the outer shell 102.4 of the energy absorbing elements 102. The stiffening plates 101.3 are evenly spaced along the first longitudinal axis 102.1, such that a plurality of energy absorbing segments 102.7 are consecutively formed along the longitudinal axis 102.1 between adjacent stiffening plates 101.3. However, it will be appreciated that, with other embodiments, uneven spacing of the stiffening plates may be provided, e.g. in order to promote a certain deformation behavior of the impact energy absorbing device.

In an impact process, starting at the contact end 102.2, the outer shell 102.4 is deformed in defined manner to absorb impact energy. The outer shell 102.4 successively locally buckles from segment 102.7 to segment 102.7. In other words, the energy absorbing segments 102.7 successively collapse in the direction of the longitudinal axis 102.1. The stiffening plates 101.3 hereby promote a local buckling process that is as even as possible. With this segment wise local buckling, each energy absorbing element 102 is successively compressed, i.e. the length of the energy absorbing element 102 along its first longitudinal axis is successively reduced, while the impact energy is absorbed.

In an offset impact situation as shown in Figure 3 and 4, where there is a lateral offset - here a vertical offset (along the Z-axis in Figure 4) - between the impact partners 101, the first longitudinal axes 102.1 of the energy absorbing elements 102 are laterally offset as well. As a consequence of the laterally offset axial impact forces, a considerable bending moment about a first transverse axis 102.8 (Y-axis) is introduced into the respective energy absorbing element 102 via the contact element 103.

In conventional systems, this bending moment may lead to global buckling of the energy absorbing element extending over a large number of energy absorbing segments and a progressive rotation of the contact element about this first transverse axis as it has been explained above. As a consequence of such a global buckling, the contact elements may perform a rotation about this first transverse axis up to a point where the contact elements, despite the presence of the anti-climbing means, may come out of engagement leading to a climbing process between the two impact partners. A further consequence of such a global buckling process is a considerable reduction in the energy absorption capacity of the impact energy absorbing device leading to higher accelerations and loads acting on the remaining vehicle structure and the passengers as it has been explained above as well.

To avoid this undesired scenario, a guide device 104 is provided cooperating with each one of the energy absorbing elements 102. The guide device 104 is located within the inner absorbing device space 101.2 and comprises four elongated first guiding elements 104.1 cooperating with inner surfaces of the outer shell 102.4 of the respective energy absorbing elements 102.

The first guiding element 104.1 has a first end 104.2, at which it is rigidly connected to the back side of the contact element 103, and a free second end 104.3. At its second end 104.3, the first guiding element 104.1 has a guiding head 104.5. The guiding head 104.5 is received between an upper wall 102.10 and an opposite lower wall 102.11 of the energy absorbing element 102.

Both, the upper wall 102.10 and the lower wall 102.11 extend in a plane parallel to the first longitudinal axis 102.1 and the first transverse axis 102.8. The guiding head 104.5 engages, among others, the upper wall 102.10 and the lower wall 102.11 of the energy absorbing elements 102 with a certain selectable play. Preferably, the same applies to the relation between the guiding head 104.5 and the lateral walls of the energy absorbing elements 102.

The second longitudinal axis 104.4 of the first guiding element 104.1 runs transverse, namely perpendicular, to the first transverse axis 102.8. Furthermore, it is collinear to the first longitudinal axis 102.1 of the energy absorbing element 102.

In an impact event with a lateral offset as it is shown in Figure 3 and 4, the contact between the guiding head 104.5 of the first guiding elements 104.1 and the upper wall 102.10 and the lower wall 102.11, respectively, of the energy absorbing elements 102 forming second guide elements provides a support to the contact element 103 counteracting the bending moment acting onto the contact element 103 due to the lateral offset of the impact partners 101. This balancing support to the contact element 103 prevents rotation of the contact element 103 about the first transverse axis 102.8 and, thus, global buckling of the energy absorbing element 102 as it has been described above in the context of conventional systems.

The play of the first guiding elements 104.1 between the upper wall 102.10 and the lower wall 102.11 of the energy absorbing elements 102 is selected such that the guide device 104 shown limits rotation of the contact element 103 about the first transverse axis 102.8 to a maximum of about 5° to 8°. However, it will be appreciated that other angular limits, in particular lower angular limits, may be achieved.

As deformation of the energy absorbing element 102 proceeds along the first longitudinal axis 102.1, the first guiding elements 104.1 move towards the mounting end 102.3 of the energy absorbing element 102. Thereby, first guiding elements 104.1 successively engage other parts of the upper wall 102.10 and the lower wall 102.11, respectively. The continuous surface of the upper wall 102.10 and the lower wall 102.11, respectively, and the permanent contact with the first guiding element 104.1 resulting therefrom ensures that the guiding effect is maintained despite any potential lateral an/or angular deviation from the exact alignment of the first and second longitudinal axis 102.1 and 104.4 that may occur as the energy absorbing segments 102.7 deform.

To avoid clamping or jamming effects that might occur under these circumstances, the guiding head 104.5 has a tapered and/or rounded contact section contacting the upper wall 102.10 and the lower wall 102.11, respectively. Similarly, the guiding head 104.5 has a tapered and/or rounded lateral contact sections contacting the two lateral walls of the energy absorbing element 102.

In some variants, the longitudinal dimension of the first guiding elements 104.1 is selected such that, during deformation of the energy absorbing element 102, their guiding head 104.5 engages a section of the upper wall 102.10 and the lower wall 102.11, respectively, lying in a section of the energy absorbing element 102 that is still essentially undeformed. This guarantees proper guidance and bending moment balancing and, thus, prevention of global buckling throughout the deformation of the energy absorbing element 102. In particular, the risk of jamming situations is widely reduced. It will be appreciated that the bending moment balancing properties of the first guiding elements 104.1 increase with an increasing longitudinal dimension of the first guiding elements 104.1.

Furthermore, it will be appreciated that the first guiding elements 104.1 are dimensioned such that their bending resistance at least about the first transverse axis 102.8 is sufficient to avoid excessive bending of the first guiding elements 104.1 themselves. Thus, proper guidance and bending moment balancing and, consequently, prevention of global buckling throughout the deformation of the energy absorbing element 102 is guaranteed.

As deformation of the energy absorbing element 102 proceeds along the first longitudinal axis 102.1, the first guiding elements 104.1 may eventually travel the entire way through the energy absorbing element 102.

It will be appreciated that, with other designs, another number of guiding elements may be selected. In some cases, even one single guiding element may be sufficient to avoid a global buckling process of the energy absorbing element about a transverse axis.

In the embodiment shown in Figure 4, the first guiding elements 104.1 are formed by a tubular element of essentially rectangular cross section. However, it will be appreciated that, with other embodiments of the invention, another shape of the guiding elements may be selected. Preferably, the cross section of the guiding elements is chosen to maximize the moment of inertia about the bending axis in order to maximize the bending resistance.

It will be appreciated that the energy absorbing device does not necessarily have to be a segmented body made out of a plurality of relatively thin wall elements. For example, it is also possible that the energy absorbing elements shown in Figure 4 are formed by a monolithic body made out of an energy absorbing material such as aluminum foam, a honeycomb structure or the like. However, for example at least in the contact area with the guiding elements 104.1, such a monolithic body may be provided with contact shell elements guaranteeing proper and stable contact conditions. Thus, for example, instead of the stiffening plates 101.3, a core of aluminum foam may completely fill out the space between the receptacles for the guiding elements 104.1.

The energy absorbing element 102 has a total length along the first longitudinal axis 102.1 of about 1200 mm and a total width along the first transverse axis 102.8 of about 550 mm. However, it will be appreciated that with other embodiments of the invention, other dimensions may be chosen according to the requirements of the design and the expected load situation. The first guiding elements 104.1 have a total length along the first longitudinal axis 102.1 of about 350 mm. However, it will be appreciated that with other designs, other dimensions may be chosen according to the requirements of the design and the expected load situation.

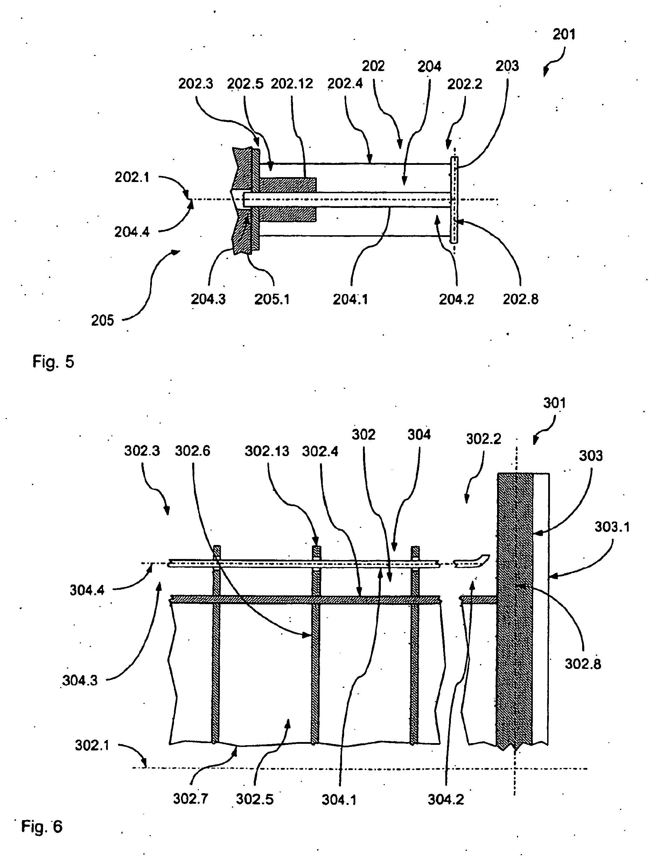

In the following an impact energy absorbing device 201 for a rail vehicle 205 not in accordance with the invention will be described with reference to Figure 5. Figure 5 shows a schematic sectional partial representation of the rail vehicle 205 with the impact energy absorbing device 201.

The impact energy absorbing device 201 comprises an elongated energy absorbing element 202 with an outer shell 202.4 and a contact element 203. The impact energy absorbing device 201, in its basic design and functionality, is similar to the one of Figures 1 and 2 such that reference is made here to the above explanations. The energy absorbing element 202 has a first longitudinal axis 202.1 (X-axis), a contact end 202.2 facing an impact partner and a mounting end 202.3 facing the vehicle 205 to which the impact energy absorbing device 201 is mounted. A mounting flange is provided at the mounting end 202.3 for mounting the energy absorbing element 202 to a support structure 205.1 of the vehicle 205.

The contact element 203 is mounted to the respective energy absorbing element 202 at its contact end 202.2. The contact element 203 has the shape of a plate carrying horizontal ribs forming an anti-climbing device.

To avoid an undesired scenario of global buckling in an offset impact, a guide device 204 is provided cooperating with the energy absorbing element 202. The guide device 204 is located within the inner absorbing element space 202.5 and comprises an elongated first guiding element in the form of a guide rod 204.1 cooperating with a guiding bush 202.12 forming a second guide element and mounted at the mounting end 202.3 of the energy absorbing element 202.

The guide rod 204.1 has a first end 204.2, at which it is rigidly connected to the back side of the contact element 203, and a second end 204.3 reaching through the guiding bush 202.12.

The second longitudinal axis 204.4 of the first guiding element 204.1 runs transverse, namely perpendicular, to the first transverse axis 202.8. Furthermore, it is collinear to the first longitudinal axis 202.1 of the energy absorbing element 202.

In an impact event with a lateral offset the contact between the guide rod 204.1 and the guiding bush 202.12 provides a support to the contact element 203 counteracting the bending moment acting onto the contact element 203 due to the lateral offset of the impact partners 201. This balancing support to the contact element 203 prevents rotation of the contact element 203 about the first transverse axis 202.8 and, thus, global buckling of the energy absorbing element 202 as it has been described above in the context of conventional systems.

The play of the guide rod 204.1 within the guiding bush 202.12 is selected such that the guide device 204 shown limits rotation of the contact element 203 about the first transverse axis 202.8 to a maximum of about 2° to 5° However, it will be appreciated that other angular limits, in particular lower angular limits, may be achieved with other designs.

As deformation of the energy absorbing element 202 proceeds along the first longitudinal axis 202.1, the guide rod 204.1 moves further towards the mounting end 202.3 of the energy absorbing element 202. This variant has the advantage that the guiding bush is located at a section of the energy absorbing element 202 that is essentially undeformed throughout the deformation of the energy absorbing element 202. This guarantees proper guidance and bending moment balancing and, thus, prevention of global buckling throughout the deformation of the energy absorbing element 202.

It will be appreciated that, with other designs, another number of guiding elements may be selected. In the design shown in Figure 5, the first guiding elements 204.1 are formed by a tubular element of essentially circulars cross section. However, it will be appreciated that, with other designs, another shape of the guide rod may be selected.

In the following a further impact energy absorbing device 301 for a rail vehicle not in accordance with the invention will be described with reference to Figure 6. Figure 6 shows - in a top view - a schematic sectional representation of a part of the impact energy absorbing device 301.

The impact energy absorbing device 301 comprises an elongated energy absorbing element 302 and a contact element 303. The impact energy absorbing device 301, in its basic design and functionality, is similar to the one of Figures 1 and 2 such that reference is made here to the above explanations. The energy absorbing element 302 has a first longitudinal axis 302.1 (X-axis), a contact end 302.2 facing an impact partner and a mounting end 302.3 facing a vehicle - not shown - to which the impact energy absorbing device 301 is mounted. A mounting flange is provided at the mounting end 302.3 for mounting the energy absorbing elements 302 to the vehicle.

The contact element 303 is mounted to the respective energy absorbing element 302 at its contact end 302.2. The contact element 303 has the shape of a plate carrying horizontal ribs 303.1 forming an anti-climbing device.

The energy absorbing element 302 has a tubular outer shell 302.4 of rectangular cross section. This outer shell 302.4 defines an inner absorbing element space 302.5. Within this inner absorbing element space 302.5 a plurality of stiffening elements in the form of stiffening plates 302.6 is connected, e.g. welded, to the outer shell 302.4. The stiffening plates 302.6 are evenly spaced along the first longitudinal axis 302.1, such that a plurality of energy absorbing segments 302.7 are consecutively formed along the longitudinal axis 302.1 between adjacent stiffening plates 302.6. However, it will be appreciated that, with other designs, uneven spacing of the stiffening plates may be provided, e.g. in order to promote a certain deformation behavior of the impact energy absorbing device.

In an impact process, starting at the contact end 302.2, the outer shell 302.4 is deformed in defined manner to absorb impact energy. The outer shell 302.4 successively locally buckles from segment 302.7 to segment 302.7 as it has been described above.

To avoid an undesired scenario of global buckling in an offset impact, a guide device 304 is provided cooperating with the energy absorbing element 302. The guide device 304 is located on the outer side of the energy absorbing device 301 and comprises two elongated first guiding elements in the form of guide rods 304.1 cooperating with recesses formed within guiding lugs 302.13 forming second guide elements.

The guide rods 304.1 are located at both lateral sides of the energy absorbing device 301. They have a rectangular cross section with a small dimension along the transverse axis 302.8 and a considerably greater dimension perpendicular to the plane of Figure 6. Thus, they have a considerable bending resistance about the transverse axis 302.8 and, at the same time, a low bending resistance about an axis perpendicular to the plane of Figure 6.

The guiding lugs 302.13 are mounted to the outer surface of the outer shell 302.4 of the energy absorbing element 302. The guiding lugs 302.12 are mounted in the region of the stiffening plates 302.6 to provide reliable and stable support to the guiding lugs 302.13.

The first guiding element 304.1 has a free first end 304.2 located close to the back side of the contact element 303, and a second end 304.3 at which it is rigidly connected to the mounting flange at the mounting end 302.3. At its first end 304.3, the first guiding element 304.1 is bent outward.

The second longitudinal axis 304.4 of the first guiding element 304.1 runs transverse, namely perpendicular, to the first transverse axis 302.8. Furthermore, it is parallel to the first longitudinal axis 302.1 of the energy absorbing element 302.

In an impact event with a lateral offset, the contact between the first guiding elements 304.1 and the guiding lugs 302.13 provides a support to the contact element 303 counteracting the bending moment acting onto the contact element 303 due to the lateral offset of the impact partners 301. This balancing support to the contact element 303 prevents rotation of the contact element 303 about the first transverse axis 302.8 and, thus, global buckling of the energy absorbing element 302 as it has been described above in the context of conventional systems.

The play of the first guiding elements 304.1 within the recesses of the between the upper wall 302.10 and the lower wall 302.11 of the guiding lugs 302.13 is selected such that the guide device 304 shown limits rotation of the contact element 303 about the first transverse axis 302.8 to a maximum of about 5° to 8°. However, it will be appreciated that other angular limits, in particular lower angular limits, may be achieved with other designs.

As deformation of the energy absorbing element 302 proceeds along the first longitudinal axis 302.1, the first guiding elements 304.1, due to their low bending resistance about an axis perpendicular to the plane of Figure 6, are readily bent outward by the rear surface of the contact element 303 without considerably influencing the local buckling process. To avoid any influence on the local buckling process or any clamping situations, the recesses of the guiding lugs 302.13 are laterally spaced from the outer shell 302.4.

The even distribution of the guiding lugs 302.13 guarantees proper guidance and bending moment balancing and, thus, prevention of global buckling throughout the deformation of the energy absorbing element 302.

It will be appreciated that, with other designs, another number of guiding elements may be selected. In some cases, even one single guiding element may be sufficient to avoid a global buckling process of the energy absorbing element about a transverse axis.

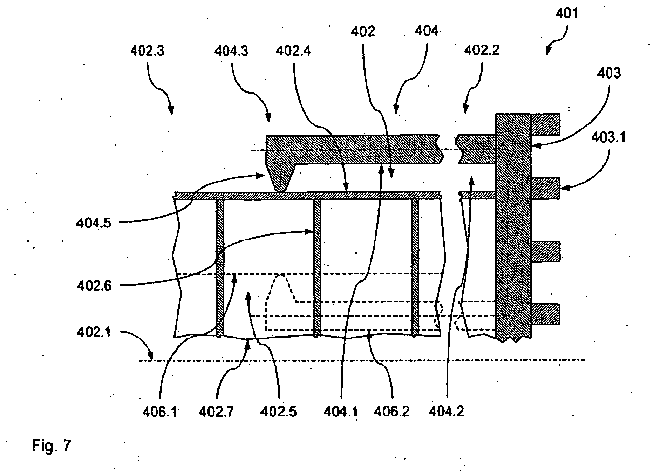

In the following an impact energy absorbing device 401 for a rail vehicle not in accordance with the invention will be described with reference to Figure 7. Figure 7 shows - in a side view - a schematic sectional representation of a part of the impact energy absorbing device 401.

The impact energy absorbing device 401 comprises an elongated energy absorbing element 402 and a contact element 403. The impact energy absorbing device 401, in its basic design and functionality, is similar to the one of Figures 1 and 2 such that reference is made here to the above explanations. The energy absorbing element 402 has a first longitudinal axis 402.1 (X-axis), a contact end 402.2 facing an impact partner and a mounting end 402.3 facing a vehicle - not shown - to which the impact energy absorbing device 401 is mounted. A mounting flange is provided at the mounting end 402.3 for mounting the energy absorbing elements 402 to the vehicle.

The contact element 403 is mounted to the respective energy absorbing element 402 at its contact end 402.2. The contact element 403 has the shape of a plate carrying horizontal ribs 403.1 forming an anti-climbing device.

The energy absorbing element 402 has a tubular outer shell 402.4 of rectangular cross section. This outer shell 402.4 defines an inner absorbing element space 402.5. Within this inner absorbing element space 402.5 a plurality of stiffening elements in the form of stiffening plates 402.6 is connected, e.g. welded, to the outer shell 402.4. The stiffening plates 402.6 are evenly spaced along the first longitudinal axis 402.1, such that a plurality of energy absorbing segments 402.7 are consecutively formed along the longitudinal axis 402.1 between adjacent stiffening plates 402.6. However, it will be appreciated that, with other embodiments of the invention, uneven spacing of the stiffening plates may be provided, e.g. in order to promote a certain deformation behavior of the impact energy absorbing device.

In an impact process, starting at the contact end 402.2, the outer shell 402.4 is deformed in defined manner to absorb impact energy. The outer shell 402.4 successively locally buckles from segment 402.7 to segment 402.7 as it has been described above.

To avoid an undesired scenario of global buckling in an offset impact, according to the invention, a guide device 404 is provided cooperating with the energy absorbing element 402. The guide device 404 is located on the outer side of the energy absorbing device 401 and comprises four elongated first guiding elements in the form of guide rods 404.1 each cooperating with the outer surface 402.4 of one of the side walls of the energy absorbing element 402 forming a second guiding element.

The first guide rod 404.1 shown in Figure 7 cooperates with the outer surface 402.4 of the upper side wall of the energy absorbing element 402. Furthermore - in symmetric arrangement with respect to the longitudinal device axis 401.1 - there is a second guide rod 404.1 cooperating with the outer surface of the lower side wall - not shown - of the energy absorbing element 402. Furthermore, there are a third and a fourth guide rod 404.1 cooperating in a similar manner with the outer surfaces of the lateral side walls - not shown - of the energy absorbing element 402.

The respective guide rod 404.1 has a first end 404.2, at which it is rigidly connected to the back side of the contact element 403, and a free second end 404.3. At its second end 404.3, the respective guide rod 404.1 has a guiding head 404.5. The guiding head 404.5 has a rounded contact nose by which it may contact the outer surface 402.4 of the energy absorbing element 402.

The respective contact nose may contact the outer surface 402.4 of the energy absorbing element 402 already in the initial undeformed state of the energy absorbing element 402. However, it will be appreciated that a certain play may be provided here as well.

The first and second guide rod 404.1 have a considerable bending resistance about the transverse axis that extends perpendicular to the plane of the drawing. The second longitudinal axis 404.4 of the first and second guide rod 404.1 runs transverse, namely perpendicular, to the first transverse axis. Furthermore, it is parallel to the first longitudinal axis 402.1 of the energy absorbing element 402.

In an impact event with a lateral offset in the vertical direction, the contact between the first and second guide rod 404.1 and the outer surface 402.4 of the upper and lower side wall, respectively, of the energy absorbing element 402 provides a support to the contact element 403 counteracting the bending moment acting onto the contact element 403 due to the lateral offset of the impact partners 401. This balancing support to the contact element 403 prevents rotation of the contact element 403 about the first transverse axis and, thus, global buckling of the energy absorbing element 402 as it has been described above in the context of conventional systems.

The eventual play between the first and second guide rod 404.1 and the outer surface 402.4 of the upper and lower side wall, respectively, of the energy absorbing element 402 is selected such that the guide device 404 shown limits rotation of the contact element 403 about the first transverse axis - i.e. rotation in the plane of the drawing - to a maximum of about 5° to 8°. However, it will be appreciated that other angular limits, in particular lower angular limits, may be achieved with other designs.

As deformation of the energy absorbing element 402 proceeds along the first longitudinal axis 402.1, the contact nose of the first or second guide rod 404.1 slides on the outer surface 402.4 of the energy absorbing element 402. The length of the respective guide rod 404.1 along its longitudinal axis 404.4 is selected such that the contact nose always contacts substantially undeformed parts of the outer surface 402.4 of the energy absorbing element 402. Thus, proper guidance is guaranteed. Furthermore, to avoid any influence on the local buckling process or any clamping situations, the distance between the parts of the guide rod 404.1 other than the contact nose and the outer surface 402.4 of the energy absorbing element 402 is selected such that substantially no contact with the locally buckling absorbing element 402 is to be expected in this area.

It will be appreciated that this embodiment with guiding elements 404.1 arranged externally to the energy absorbing element 402 is particularly suitable for upgrading known or existing energy absorbing elements by simply mounting the guiding elements 404.1 to the rear part of the contact element 403.

It will be further appreciated that, with other designs, another number of guide rods may be provided. In particular, a plurality of guide rods may be provided per side wall of the energy absorbing element 402. Furthermore, instead of having a number of distinct guide rods surrounding the energy absorbing element 402, a tubular guide element being arranged concentrically to the energy absorbing element 402 may be provided. The tubular guide element - in a section containing the longitudinal device axis 401.1 - may have the same cross section as the one of the guide rods 404.1 shown in Figure 7.

It will be further appreciated that the energy absorbing element does not necessarily have to be a segmented body made out of a plurality of relatively thin wall elements. For example, it is also possible that the energy absorbing element shown in Figure 7 is formed by a monolithic body made out of an energy absorbing material such as aluminum foam, a honeycomb structure or the like. However, for example at least in the contact area with the guide rods 404.1, such a monolithic body may be provided with contact shell elements guaranteeing proper and stable contact conditions.

Thus, for example, instead of the stiffening plates 402.6, a core of aluminum foam may completely fill out the inner absorbing element space 402.5. Furthermore, in a configuration with internally arranged guiding elements as described in the context of Figure 3 and 4, the core of aluminum foam may have the shape of a rather thick walled tube as it is indicated in Figure 7 by the dashed contour 406.1. Guiding elements as described in the context of Figure 3 and 4 may then cooperate with the inner wall of such a tube as it is indicated in Figure 7 by the dashed contour 406.2.

## Claims

1. Impact energy absorbing device for a vehicle, in particular for a rail vehicle, comprising:
- at least one elongated energy absorbing element (2),
- a contact element (3) and
- a guide device (4);
- said energy absorbing element (2) having a first longitudinal axis (2.1), a contact end (2.2) facing an impact partner and a mounting end (2.3) facing said vehicle;
- said energy absorbing element (2) being adapted to be deformed in a defined manner along said longitudinal axis (2.1) in an impact process with said impact partner;
- said contact element (3) being mounted to said energy absorbing element (2) at said contact end (2.2);
- said guide device (4) being adapted to cooperate with said energy absorbing element (2) in said impact process;
- said guide device (4) being adapted to at least limit, in said impact process, rotation of said contact element (3) about a first transverse axis (2.8) running transverse to said first longitudinal axis (2.1);
- said guide device (4) comprising at least one elongated first guide element (4.1);
- said first guide element (4.1) having a first end being mechanically connected to said contact element (3) and a free second end;
- said first guide element (4.1) having a second longitudinal axis (4.4), said second longitudinal axis (4.4) running transverse, in particular perpendicular, to said first transverse axis (2.8);
- said energy absorbing element (2) comprising at least one second guide element (2.6);
- said first guide element (4.1) being adapted to come into engagement with a part of said second guide element (2.6) as deformation of said energy absorbing element (2) proceeds in an impact event;
- said part of said second guide element (2.6) being located between said contact end (2.2) and said mounting end (2.3) of said energy absorbing element (2);
wherein
- said energy absorbing element (2) comprises a plurality of stiffening elements (2.6) located within an inner absorbing element space (2.5) defined by said energy absorbing element (2);
- said stiffening elements (2.6) being mutually spaced apart along said first longitudinal axis (2.1) and extending in a plane transverse to said first longitudinal axis (2.1);
- at least one of said stiffening elements (2.6) forming said second guide element.

2. Impact energy absorbing device according to claim 1, **characterized in that** said guide device (4), in said impact process, limits a first rotation angle of said contact element (3) about said first transverse axis (2.8) to less than 20°, preferably less than 10°, further preferably to less than 5°.

3. Impact energy absorbing device according to claim 1 or 2, **characterized in that** said guide device (4) is adapted to cooperate, in said impact process, at least with parts of said energy absorbing element (2) that are essentially undeformed when cooperating with said guide device (4).

4. Impact energy absorbing device according to any one of the preceding claims, **characterized in that**
- said energy absorbing element (2) comprises a plurality of second guide elements (2.6);
- said second guide elements (2.6) being mutually spaced apart along said second longitudinal axis (4.4).

5. Impact energy absorbing device according to any one of the preceding claims, **characterized in that**
- at least one second guide element is formed by a recess (2.8) of said stiffening element (2.6);
- said first guide element (4.1) engaging said recess (2.8) in said impact process.

6. Impact energy absorbing device according to any one of the preceding claims, **characterized in that** said first guide element (4.1) tapers towards said second end.

7. Impact energy absorbing device according to any one of the preceding claims, **characterized in that** said contact element (3) comprises anti-climbing means (3.1), in particular at least one anti-climbing rib.

8. Impact energy absorbing device according to any one of the preceding claims, **characterized in that**
- a plurality of guide devices is provided
- said guide devices being adapted to cooperate with said energy absorbing element in said impact process;
- said guide devices being adapted to at least limit, in said impact process, rotation of said contact element about said first transverse axis.

9. Vehicle, in particular rail vehicle, comprising an impact energy absorbing device (1) according to any one of the preceding claims.

## Patentansprüche

1. Stoßenergieabsorbierende Vorrichtung für ein Fahrzeug, speziell für ein Schienenfahrzeug, umfassend:
- wenigstens ein langgestrecktes energieabsorbierendes Element (2),
- ein Kontaktelement (3) und
- eine Führungsvorrichtung (4),
- wobei das energieabsorbierende Element (2) eine erste Längsachse (2.1), ein Kontaktende (2.2), das einem Aufprallpartner zugekehrt ist, und ein Befestigungsende (2.3) aufweist, das dem Fahrzeug zugekehrt ist,
- wobei das energieabsorbierende Element (2) derart ausgebildet ist, dass es sich bei einem Aufprallprozess mit dem Aufprallpartner auf definierte Weise entlang der Längsachse (2.1) verformt,
- wobei das Kontaktelement (3) an dem energieabsorbierenden Element (2) an dem Kontaktende (2.2) montiert ist,
- wobei die Führungsvorrichtung (4) derart ausgebildet ist, dass sie bei dem Aufprallprozess mit dem energieabsorbierenden Element (2) zusammenwirkt,
- wobei die Führungsvorrichtung (4) derart ausgebildet ist, dass sie bei dem Aufprallprozess die Drehung des Kontaktelements (3) um eine erste Querachse (2.8), die quer zu der ersten Längsachse (2.1) verläuft, zumindest begrenzt,
- wobei die Führungsvorrichtung (4) wenigstens ein langgestrecktes erstes Führungselement (4.1) aufweist,
- wobei das erste Führungselement (4.1) ein erstes Ende, das mechanisch mit dem Kontaktelement (3) verbunden ist, und ein freies zweites Ende aufweist,
- wobei das erste Führungselement (4.1) eine zweite Längsachse (4.4) aufweist, wobei die zweite Längsachse (4.4) quer, insbesondere senkrecht, zur ersten Querachse (2.8) verläuft,
- wobei das energieabsorbierende Element (2) wenigstens ein zweites Führungselement (2.6) aufweist,
- wobei das erste Führungselement (4.1) derart ausgebildet ist, dass es beim Voranschreiten der Verformung des energieabsorbierenden Elements (2) bei einem Aufprallereignis mit einem Teil des zweiten Führungselements (2.6) in Eingriff kommt,
- wobei der Teil des zweiten Führungselements (2.6) zwischen dem Kontaktende (2.2) und dem Befestigungsende (2.3) des energieabsorbierenden Elements (2) liegt,
wobei
- das energieabsorbierende Element (2) eine Vielzahl von Versteifungselementen (2.6) aufweist, die sich in einem von dem energieabsorbierenden Element (2) definierten inneren Absorberelementraum (2.5) befinden,
- die Versteifungselemente (2.6) entlang der ersten Längsachse (2.1) gegenseitig voneinander beabstandet sind und in einer Ebene verlaufen, die quer zur ersten Längsachse (2.1) verläuft.
- wenigstens eines der Versteifungselemente (2.6) das zweite Führungselement bildet.

2. Stoßenergieabsorbierende Vorrichtung nach Anspruch 1, **dadurch gekennzeichnet, dass** die Führungsvorrichtung (4) bei dem Aufprallprozess einen ersten Drehwinkel des Kontaktelements (3) um die erste Querachse (2.8) auf weniger als 20°, bevorzugt auf weniger als 10°, mehr bevorzugt auf weniger als 5° begrenzt.

3. Stoßenergieabsorbierende Vorrichtung nach Anspruch 1 oder 2, **dadurch gekennzeichnet, dass** die Führungsvorrichtung (4) derart ausgebildet ist, dass sie bei dem Aufprallprozess wenigstens mit Teilen des energieabsorbierenden Elements (2) zusammenwirkt, die im Wesentlichen unverformt sind, wenn sie mit der Führungsvorrichtung (4) zusammenwirken.

4. Stoßenergieabsorbierende Vorrichtung nach einem der vorhergehenden Ansprüche, **dadurch gekennzeichnet, dass**
- das energieabsorbierende Element (2) eine Vielzahl von zweiten Führungselementen (2.6) aufweist,
- die zweiten Führungselemente (2.6) entlang der zweiten Längsachse (4.4) gegenseitig voneinander beabstandet sind.

5. Stoßenergieabsorbierende Vorrichtung nach einem der vorhergehenden Ansprüche, **dadurch gekennzeichnet, dass**
- von einer Aussparung (2.8) des Versteifungselements (2.6) wenigstens ein zweites Führungselement gebildet wird,
- das erste Führungselement (4.1) bei dem Aufprallprozess in der Aussparung (2.8) in Eingriff kommt.

6. Stoßenergieabsorbierende Vorrichtung nach einem der vorhergehenden Ansprüche, **dadurch gekennzeichnet, dass** das erste Führungselement (4.1) sich zu dem zweiten Ende hin verjüngt.

7. Stoßenergieabsorbierende Vorrichtung nach einem der vorhergehenden Ansprüche, **dadurch gekennzeichnet, dass** das Kontaktelement (3) Aufkletterschutzmittel (3.1; 103.1; 403.1) aufweist, insbesondere wenigstens eine Aufkletterschutzrippe.

8. Stoßenergieabsorbierende Vorrichtung nach einem der vorhergehenden Ansprüche, **dadurch gekennzeichnet, dass**
- eine Vielzahl von Führungsvorrichtungen bereitgestellt ist,
- die Führungsvorrichtungen derart ausgebildet sind, dass sie bei dem Aufprallprozess mit dem energieabsorbierenden Element zusammenwirken,
- die Führungsvorrichtungen derart ausgebildet sind, dass sie bei dem Aufprallprozess die Drehung des Kontaktelements um die erste Querachse zumindest begrenzen.

9. Fahrzeug, speziell Schienenfahrzeug, das eine stoßenergieabsorbierende Vorrichtung (1) nach einem der vorhergehenden Ansprüche aufweist.

## Revendications

1. Dispositif d'absorption d'énergie de choc pour un véhicule, en particulier pour un véhicule ferroviaire, comprenant :
- au moins un élément allongé d'absorption d'énergie (2),
- un élément de contact (3) et
- un dispositif de guidage (4);
- ledit élément d'absorption d'énergie (2) ayant un premier axe longitudinal (2.1), une extrémité de contact (2.2) montrant vers un partenaire d'impact et une extrémité de montage (2.3) montrant vers ledit véhicule;
- ledit élément d'absorption d'énergie (2) étant adapté pour être déformé d'une manière définie le long dudit axe longitudinal (2.1) dans un processus d'impact avec ledit partenaire d'impact;
- ledit élément de contact (3) étant monté sur ledit élément d'absorption d'énergie (2) à ladite extrémité de contact (2.2);
- ledit dispositif de guidage (4) étant adapté pour coopérer avec ledit élément d'absorption d'énergie (2) dans ledit processus d'impact;
- ledit dispositif de guidage (4) étant adapté pour au moins limiter, dans ledit processus d'impact, la rotation dudit élément de contact (3) autour d'un premier axe transversal (2.8) s'étirant transversalement par rapport audit premier axe longitudinal (2.1);
- ledit dispositif de guidage (4) comprenant au moins un premier élément de guidage allongé (4.1);
- ledit premier élément de guidage (4.1) ayant une première extrémité étant reliée mécaniquement audit élément de contact (3) et une seconde extrémité libre;
- ledit premier élément de guidage (4.1) ayant un deuxième axe longitudinal (4.4), ledit deuxième axe longitudinal (4.4) s'étendant transversalement, notamment perpendiculairement, par rapport audit premier axe transversal (2.8)
- ledit élément d'absorption d'énergie (2) comprenant au moins un second élément de guidage (2.6);
- ledit premier élément de guidage (4.1) est adapté pour venir en engagement avec une partie dudit second élément de guidage (2.6) au cours de la déformation progressante dudit élément d'absorption d'énergie (2) en cas d'impact;
- ladite partie dudit second élément de guidage (2.6) étant située entre ladite extrémité de contact (2.2; 102.2; 402.2) et ladite extrémité de montage (2.3) dudit élément d'absorption d'énergie (2)
dans lequel
- ledit élément d'absorption d'énergie (2) comprend une pluralité d'éléments de rigidification (2.6) situés à l'intérieur d'un espace d'élément d'absorption interne (2.5) défini par ledit élément d'absorption d'énergie ;
- lesdits éléments de rigidification (2.6) étant mutuellement espacés le long dudit premier axe longitudinal (2.1) et s'étendant dans un plan transversal audit premier axe longitudinal (2.1);
au moins un desdits éléments de rigidification (2.6) forme ledit second élément de guidage.

2. Dispositif d'absorption d'énergie de choc selon la revendication 1, **caractérisé en ce que** ledit dispositif de guidage (4), dans ledit processus d'impact, limite un premier angle de rotation dudit élément de contact (3) autour dudit premier axe transversal (2.8) à moins de 20°, de préférence à moins de 10°, mieux encore à moins de 5°.

3. Dispositif d'absorption d'énergie de choc selon la revendication 1 ou 2, **caractérisé en ce que** ledit dispositif de guidage (4) est adapté pour coopérer, dans ledit processus d'impact, au moins avec des parties dudit élément d'absorption d'énergie (2) qui sont essentiellement non déformées lorsqu'elles coopèrent avec ledit dispositif de guidage (4).

4. Dispositif d'absorption d'énergie de choc selon la revendication 5, **caractérisé en ce que**
- ledit élément d'absorption d'énergie (2) comprend une pluralité de seconds éléments de guidage (2.6);
- lesdits seconds éléments de guidage (2.6) étant mutuellement espacés le long dudit second axe longitudinal (4.4).

5. Dispositif d'absorption d'énergie de choc selon la revendication 8, **caractérisé en ce que**
- au moins un second élément de guidage est formé par une échancrure (2.8) dudit élément de rigidification (2.6);
- ledit premier élément de guidage (4.1) venant en engagement dans ladite échancrure (2.8) dans ledit processus d'impact.

6. Dispositif d'absorption d'énergie de choc selon une quelconque des revendications précédentes, **caractérisé en ce que** ledit premier élément de guidage (4.1) se rétrécit vers ladite seconde extrémité.

7. Dispositif d'absorption d'énergie de choc selon une quelconque des revendications précédentes, **caractérisé en ce que** ledit élément de contact (3) comprend des moyens anti-escalade (3.1), en particulier au moins un bourrelet anti-escalade.

8. Dispositif d'absorption d'énergie de choc selon une quelconque des revendications précédentes, **caractérisé en ce que**
- une pluralité de dispositifs de guidage est prévue
- lesdits dispositifs de guidage étant adaptés pour coopérer avec ledit élément d'absorption d'énergie dans ledit processus d'impact;
- lesdits dispositifs de guidage étant adaptés pour au moins limiter, dans ledit processus d'impact, la rotation dudit élément de contact autour dudit premier axe transversal.

9. Véhicule, en particulier véhicule ferroviaire, comprenant un dispositif d'absorption d'énergie de choc (1) selon une quelconque des revendications précédentes.
